# EUROPEAN PATENT APPLICATION

(11) **EP 1 314 911 A2**
(43) Date of publication of application: **28.05.2003**
(21) Application number: 02024892.8
(22) Date of filing: 08.11.2002
(51) Int. Cl.: F16H 37/08

(54) **A variable-ratio transmission**

(30) Priority: 23.11.2001 IT PD20010275
(71) Applicant: CARRARO S.P.A., I-35011 Campodarsego (Padova) (IT)
(72) Inventor: Cesaroni, Antonio Francisco, 35010 Vigodarzere (PD) (IT)
(74) Representative: Fabris, Stefano (IT)

(57) **Abstract**

A variable-ratio transmission comprises a differential kinematic mechanism (10; 30) including at least two drive inputs (13) and one drive output (3) and a speed variator (4, 6a, 6b; 204, 206a, 206b) associated with at least one of the two drive inputs (13).

## Description

The subject of the present invention is a variable-ratio transmission, particularly of the type which is generally described by the acronym "CVT", which is derived from the term "continuously variable transmission".

These transmissions enable the transmission ratio between a drive input and a drive output to be varied, preferably continuously.

Currently-known rotary drive-transmission systems with continuously variable transmission ratios are divided substantially into two main types. The first type comprises systems which use fluids under pressure. Typically they use hydrostatic pumps and motors with results which are good with regard to the continuity of the transmission ratio but which are unsatisfactory from the point of view of performance, noise and cost. Moreover, it is necessary to provide devices such as heat exchangers for dissipating lost power.

The second type comprises mechanical friction variators, such as cone-and-wheel variators, Graham variators, idle-cone variators, and yet others generally based on the variation of the transmission ratio by variation of the diameter of contact between a driving element and a driven element in mutual engagement for friction driving. Disc-and-wheel variators in which the wheel can be displaced diametrally relative to the disc (or, conversely, the disc can be displaced relative to the wheel) in order to vary the transmission ratio in dependence on the diameter of contact and rolling on the disc (or on the wheel) are of particular importance with regard to the present invention.

Another known system is that of variators having variable-diameter pulleys with belts which transmit the drive from the drive pulley to the driven pulley.

However, all of these systems have the disadvantage that they do not enable the drive to be reversed and, with belt-and-pulley transmissions, there are problems of fatigue life. To enable the drive to be reversed, it is necessary to provide a suitable inverter, with consequent adverse effects on production costs.

The invention falls within this technical field and has the main task of providing a variable-ratio transmission which is designed structurally and functionally to overcome the disadvantages discussed with reference to the prior art mentioned. Within the scope of this task, a primary object of the invention is to provide a transmission which enables the drive to the output shaft to be reversed without the use of inverters or other accessory devices.

Another object of the invention is to provide a transmission which permits a splitting of the power which passes through it, low noise, and good mechanical performance and, at the same time, which can replace entire existing transmission units at low cost.

This task and these objects are achieved by the invention by means of a variable-ratio transmission formed in accordance with the appended claims.

The characteristics and the advantages of the invention will become clearer from the detailed description of a few preferred embodiments thereof, described by way of non-limiting example, with reference to the appended drawings, in which:
Figures 1 and 2 are schematic views illustrating a first embodiment of the transmission according to the invention, shown in longitudinal section and in front elevation, respectively,
Figure 3 is a schematic view illustrating a second embodiment of the transmission according to the invention,
Figure 4 is a schematic view illustrating a third embodiment of the transmission according to the invention,
Figure 5 is a schematic view illustrating a fourth embodiment of the transmission according to the invention, and

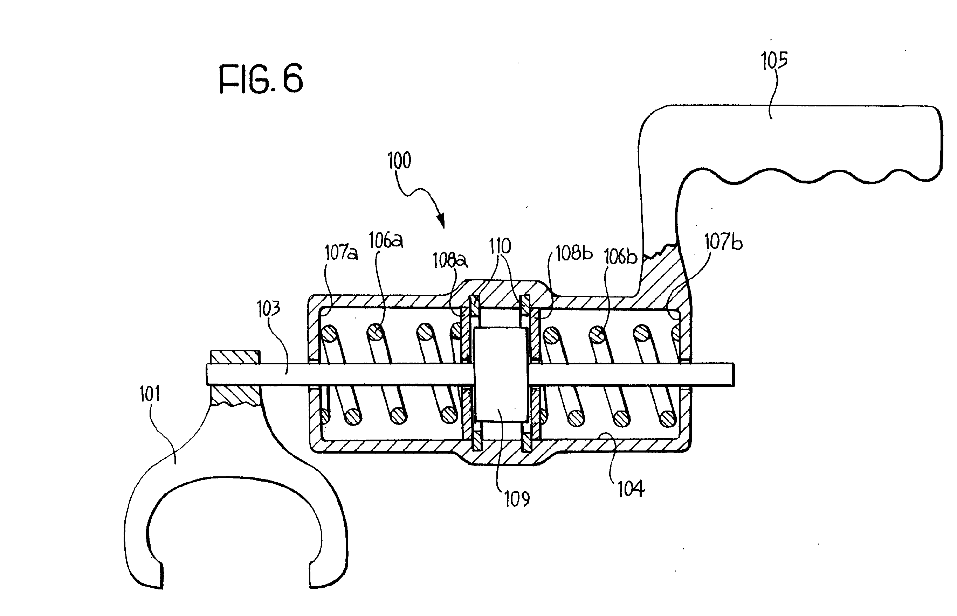

Figure 6 is a schematic view showing, in longitudinal section, a system for the operative control of the variation of the transmission ratio in the transmission of Figures 1 and 2.

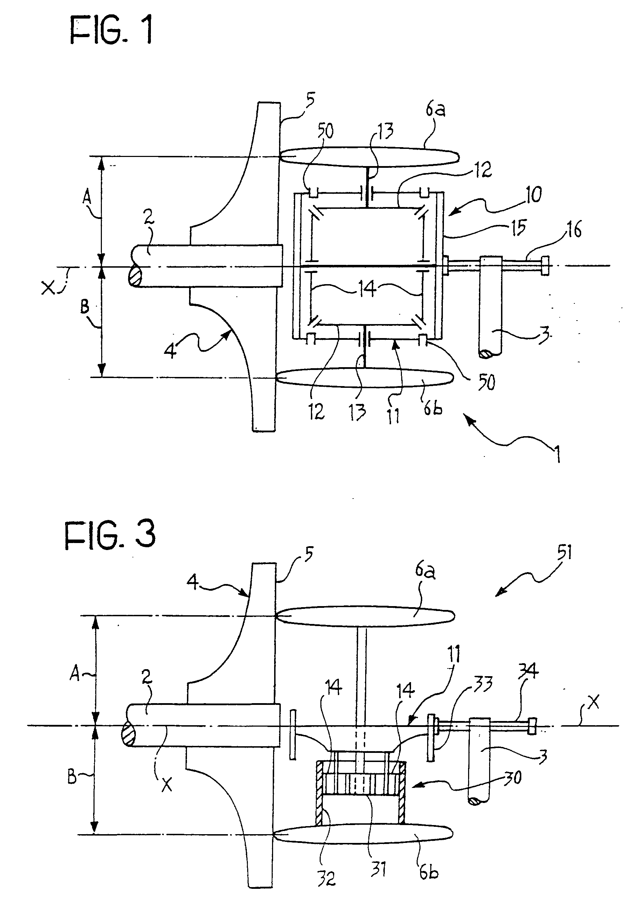

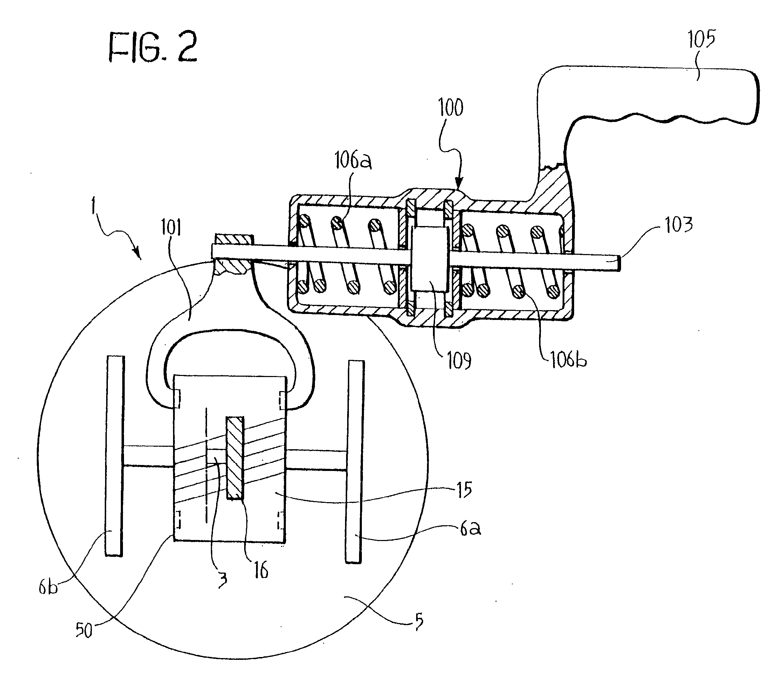

Transmissions with continuously variable transmission ratios formed in accordance with the first two embodiments of the present invention are generally indicated 1 and 51, respectively, in Figures 1 to 3. A drive-input shaft 2 and a drive-output shaft 3 are shown in the transmission 1, 51. The terms "drive input" and "drive output" are wholly conventional since, in the transmission 1, 51, as in many transmissions, the functions of the two shafts 2, 3 can be reversed without adversely affecting its operation.

The shaft 2 is rotated about its axis X and a disc 4 having a friction surface 5 is fixed for rotation therewith. Two driven friction wheels 6a, 6b, are urged against the surface 5 and can be displaced over it so as to vary the distances A, B between the respective points of contact with the surface 5 and the axis of rotation X of the shaft 2. The wheels 6a, 6b thus form, with the disc 4, respective disc-and-wheel continuous speed variators (in this connection, see Perucca - Dizionario di ingegneria (Dictionary of engineering) - under the headword "variatore" (variator)).

An external preloading system (not shown) ensures the friction necessary for the transmission of the drive, without slippage, between the wheels 6a, 6b and the disc 4. Since the wheels 6a, 6b lie on opposite sides of the axis X, they will be driven by being rotated by the disc 4 about their own axes at speeds proportional to the respective distances A, B from the axis X, and in opposite directions.

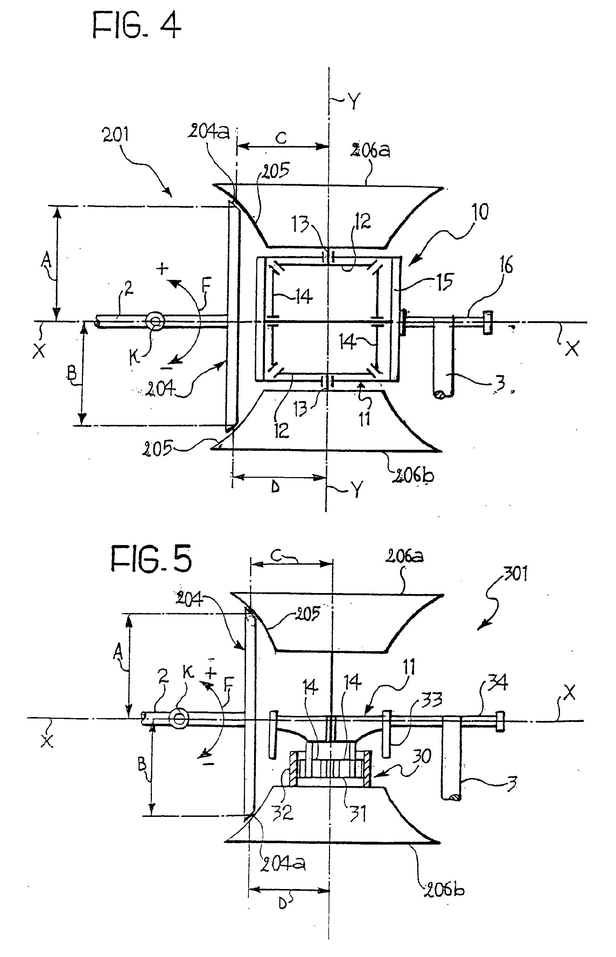

The connection between the wheels 6a, 6b and the drive-output shaft 3 is formed by a differential kinematic mechanism, generally indicated 10 in Figure 1 with reference to a first embodiment, and 30 in Figure 3 with reference to a second embodiment of the invention. The difference between the two embodiments lies substantially in the fact that the differential kinematic mechanism (for brevity the "differential") of Figure 1 is of the type with bevel gears, whereas that of Figure 3 is of the epicyclic type. Similar or functionally equivalent details in the two embodiments are indicated, where appropriate, by the same reference numerals.

The total motive power input to the transmission 1, 51 by the shaft 2 is split by the differential kinematic mechanism 10, 30 along two branches (hereinafter referred to as planetary kinematic mechanisms), each associated with one of the two wheels 6a, 6b, and is recombined at the output from the differential kinematic mechanism (by an algebraic sum that takes account of the directions of rotation of the two wheels).

Both of the differential kinematic mechanisms 10, 30 have conventional configurations; the kinematic mechanism 10 comprises a cage 11 rotatably supporting crown wheels 12, fixed for rotation with the corresponding wheels 6a, 6b by means of respective drive-input shafts 13 and both meshing with planet gears 14. A ring gear 15 of a set of gears the pinion 16 of which is fixed for rotation with the drive output shaft 3, is also mounted on the cage 11.

In the differential kinematic mechanism 30, the cage 11 carries a plurality of planet gears 14 in mutual engagement with a sun gear and a ring gear, indicated 31 and 32, respectively, with the function of crown wheels (drive input to the differential kinematic mechanism). The cage 11 is also connected to the drive-output shaft 3 by means of a pair of gears 33, 34 in this embodiment.

As mentioned above, if the distance between the point of contact of the friction wheels 6a, 6b and the axis X is varied, the crown wheels 12, 31, 32 adopt different speeds of rotation. The drive is transmitted by the planet gears 14 to the cage 11 in accordance with the drive-transmission laws characteristic of the type of differential used. Since the displacement of the two friction wheels 6a, 6b can take place continuously, the transmission ratio of the transmission 1 will also vary continuously. The displacements of the wheels 6a, 6b may be independent, or dependent, or only one of the friction wheels may be displaced in order to bring about the desired variation of the transmission ratio. Since it is possible, with this mechanism, to cause the wheels 6a, 6b to rotate in opposite directions, it is possible to deduce, from the drive-transmission law characteristic of the type of differential, values of the distances A and B such that the speed of rotation of the cage is zero and the speed of the drive output shaft 3 is consequently also zero. These distance values correspond to a drive-reversal condition of the transmission 1 such that a further displacement of either of the two friction wheels 6a, 6b from the reversal condition will bring about rotation of the cage 11, or of the output shaft 3, in the opposite direction.

The operative control of the variation of the transmission ratio is preferably performed by displacement of the entire differential kinematic mechanism 10, 30 relative to the disc 4 and to the driven shaft 3. For this purpose, and with reference to the embodiment of Figure 1, the cage 11 is equipped with a collar 50 and the teeth of the ring gear 15 extend axially so as to be able to mesh with the pinion 16 whilst permitting an axial movement relative thereto.

The collar 50 houses and restrains axially a yoke 101 of the control system 100. The yoke 101 is fixed firmly to the end of a rod 103 guided slidably in a cylinder 104 provided with actuator means, represented schematically by a handle 105. The actuator means 105 enable a force for implementing the desired operative control (variation of the transmission ratio) to be applied to the cylinder 104 in the direction which tends to move the yoke 101 in corresponding manner.

The displacement of the cylinder 104 and of the rod 103 of the yoke 101 are correlated with one another by a resilient system which comprises two 106a, 106b, preloaded between respective opposed shoulders 107a, 107b of the cylinder 104 and respective opposed plates 108a, 108b, between which an annular projection 109 of the rod 103 is disposed. The springs preferably have equal preloading and are restrained by rings 110 which act on the plates 108a, 108b so as to prevent the preloading being applied to the rod 103 when it is in the central, neutral position relative to the cylinder 104. Preferably, the ring gear and pinion 15, 16 are a pair of spur gears or are formed by helical gears and, in any case, are such as to generate, in the presence of a torque transmitted, a thrust proportional to the twisting moment delivered by the transmission. It is desirable to keep this twisting moment below a predetermined limit, for reasons of reliability of the transmission and/or for reasons of safety.

The displacement of the cylinder 104 by the actuator means 105 translates into a corresponding displacement of the plates 108a, 108b, if the resisting thrust on the shaft 103 is less than the preloading of the springs 106a, 106b. A corresponding displacement of the cage 11 and of the wheels 6a, 6b is thus brought about, with a consequent variation of the transmission ratio consistent with the above-mentioned displacement.

If the resisting thrust on the shaft 103 is greater than the preloading of the springs, the spring which is subject to this thrust yields and is compressed so that the displacement of the cylinder 104 does not lead to a corresponding variation of the transmission ratio. However, the resilient load on the shaft 103 corresponding to the resilient deformation of the spring is maintained so that, upon cessation of the transmission-overload condition, the desired variation of the transmission ratio can take place.

The system thus permits displacement of the movable element of the transmission, with which the variation of the transmission ratio is correlated, whenever the twisting moment delivered by the transmission is below a predetermined threshold value. Whenever the twisting moment delivered by the transmission exceeds the predetermined threshold value, however, the displacement of the movable transmission element is no longer proportional to the displacement imparted by the actuator means and the value of the torque delivered is kept close to the predetermined threshold value.

Figures 4 and 5 show two further variants of the variable-ratio transmission of the invention. Similar details are indicated by the same reference numerals as were used in the preceding drawings.

The two variants relate to the embodiments of Figures 1 and 3, respectively, and are indicated 201 and 301, respectively. They are provided with differential kinematic mechanisms of the type indicated 10 (transmission 201) and of the type indicated 30 (transmission 301), respectively, coupled to respective friction wheels 206a, 206b, the lateral surfaces 205 of which preferably have a curved shape. The wheels 206a, 206b are coaxial, with an axis Y, and their lateral surfaces 205 are kept in rolling contact with the peripheral edge 204a of a disc 204 with sufficient preloading for the transmission of the desired torque by friction. The disc 204 is fixed firmly to the drive-input shaft 2, which is pivotable about an axis K in the two directions indicated by the arrow F of Figures 4 and 5. This pivoting is brought about whilst the rolling contact between the peripheral edge 204a of the disc and the surfaces 205 is maintained. The axis K consequently also constitutes the centre of curvature of the curved profile of the lateral surface 205. The distances between the points of contact of the disc 204 with the lateral surfaces 205 of the wheels 206a, 206b and the axis Y are indicated C and D, respectively. In these variants, the wheels 206a, 206b are again driven by being rotated by the disc 204 about the axis Y at a speed inversely proportional to the respective distances C and D, and in opposite directions. For the same reasons already given with reference to the previous embodiments of the invention, the total motive power input to the transmissions 201, 301 by means of the shaft 2 is consequently split along the two branches of the planetary kinematic mechanisms associated with the wheels 206a, 206b, respectively, and recombined at the output from the differential kinematic mechanism by an algebraic sum that takes account of the direction of rotation of the two wheels. In these variants, the variation can again take place continuously and it is possible to deduce values of the distances and C and D such that the speed of rotation of the cage and of the drive output shaft 3 is zero (drive-reversal condition), with the result that the drive can be reversed without the use of auxiliary inverters.

The invention thus achieves the objects proposed, affording further advantages, amongst which is relative compactness and structural simplicity which permit embodiments thereof which are suitable both as original equipment and for replacing known transmissions.

The ability to reverse the direction of rotation of the drive-output shaft without the need to engage inverters or other separate transmission members, simply by varying the positioning of the friction wheels relative to the contact surface on the disc is particularly noteworthy. Since this movement necessarily passes through the reversal condition in which the drive-output shaft has zero speed, it is possible to perform operations of this type very quickly and without risk of damage to the transmission.

## Claims

1. A variable-ratio transmission, **characterized in that** it comprises a differential kinematic mechanism (10; 30) including at least two drive inputs (13) and one drive output (3) and a speed variator (4, 6a, 6b; 204, 206a, 206b) associated with at least one of the two drive inputs (13).

2. A transmission according to Claim 1 in which the speed variator is kinematically connected to each of the drive inputs (13).

3. A transmission according to Claim 1 or Claim 2 in which the drive inputs (13) are planetary kinematic mechanisms of the differential kinematic mechanism (10; 30).

4. A transmission according to one or more of the preceding claims in which the speed variator is of the continuous, disc (4, 204) -and-wheel (6a, 6b; 206a, 206b) type.

5. A transmission according to Claim 4 in which the speed variator comprises a friction wheel (6a, 6b, 206a, 206b) associated with each planetary kinematic mechanism and in rolling engagement with a single, common disc (4, 204), connected for rotation with a drive input shaft (2) of the transmission, at least one of the friction wheels being displaceable relative to the axis (x) of rotation of the disc, or the disc being displaceable relative to the contact surfaces of the friction wheels.

6. A transmission according to Claim 5 in which each of the friction wheels is displaceable relative to the axis of rotation of the disc.

7. A transmission according to Claim 5 in which the disc is displaceable relative to the friction wheels in order to vary the distance (C, D) of the point of contact between the disc and the wheel from the axis of rotation of the wheels.

8. A transmission according to one or more of the preceding claims in which the differential kinematic mechanism is of the type with bevel gears (10).

9. A transmission according to any one of Claims 1 to 7 in which the differential kinematic mechanism is epicyclic (30).

10. A transmission according to one or more of Claims 5 to 9 in which the friction wheels are disposed on opposite sides of the axis of rotation of the disc.

11. A transmission according to one or more of the preceding claims in which the variation is controlled by displacing two elements (4, 10; 4, 30) of the transmission relative to one another along a displacement axis, and in which the elements can give rise to a thrust having a component along the displacement axis, which component is correlated with the torque transmitted by the transmission, the transmission comprising a system (100) for controlling the variation of the transmission ratio, the system including operative control means interposed between actuator means (105) and at least one (10; 30) of the two transmission elements in order to instigate the displacement upon the operation of the actuator means, resilient means (106a, 106b) being interposed between the operative control means and the actuator means (105) and can yield resiliently as a result of the thrust component along the displacement axis when the said component exceeds a predetermined threshold value corresponding to a maximum value of the torque transmitted by the transmission.

12. A transmission according to Claim 11 in which the resilient means comprise at least one preloaded spring (106a, 106b).

13. A transmission according to Claim 11 or Claim 12 in which the resilient means comprise at least two counteracting springs both active along the displacement axis.

14. A transmission according to Claim 13 in which both of the springs are preloaded and are arranged so as to be inactive on the control means in the absence of a thrust having a component along the displacement axis.

15. A transmission according to one or more of Claims 11 to 14 in which the operative control means comprise a rod (103) guided in a housing (104) of the springs (106a, 106b) and the springs are compressed between respective shoulders (107a, 107b) of the housing and an annular (109) projection of the rod.

16. A transmission according to one or more of Claims 11 to 15 in which the displaceable element (10, 30) comprise a ring gear (15) and a pinion (16) at the output from the transmission, respectively.

17. A transmission according to Claim 16 in which the ring gear or the pinion are spur gears and/or have helical teeth.
